# EUROPÄISCHE PATENTSCHRIFT

(11) **EP 3 678 510 B1**
(45) Veröffentlichungstag und Bekanntmachung des Hinweises auf die Patenterteilung: **01.09.2021**
(21) Anmeldenummer: 17832771.4
(22) Anmeldetag: 18.12.2017
(51) Int. Cl.: A47B 13/10

(54) **TISCHPLATTE**
TABLE TOP
PLATEAU DE TABLE

(30) Priorität: 08.09.2017 DE 202017105463 U
(43) Veröffentlichungstag der Anmeldung: 15.07.2020
(73) Patentinhaber: EinrichtWerk GmbH, 44577 Castrop-Rauxel (DE)
(72) Erfinder: OCHSENFELD, Gerhard, 42555 Velbert (DE); OCHSENFELD, Michael, 44388 Dortmund (DE)
(74) Vertreter: Schneiders & Behrendt Bochum
(86) Internationale Anmeldenummer: PCT/EP2017/083330
(87) Internationale Veröffentlichungsnummer: WO 2019/048073

(56) Entgegenhaltungen:
- DE-U1- 29 617 925
- NL-C1- 1 027 312

## Beschreibung

Die Erfindung betrifft eine Tischplatte sowie einen Tisch, umfassend eine Tischplatte und eine Tischunterkonstruktion.

Tische kommen als eines der üblichsten Möbelstücke unter anderem häufig in Schulen oder Kindergärten zum Einsatz. Gerade in Schulen ist eine gewisse Flexibilität hinsichtlich der Aufstellung der Tische von Vorteil. Auf der einen Seite werden für den herkömmlichen Frontalunterricht einzelne Tische benötigt, an denen jeweils ein oder ggf. zwei Schüler sitzen können, die in Richtung des Lehrers schauen. Für Gruppenarbeiten hingegen werden mehrere Tische zusammengestellt, um beispielsweise 3er-, 4er-, 6er- oder auch 12er-Gruppierungen zu bilden. Bei herkömmlichen Tischen mit einer rechteckigen Tischplatte ist dies zwar grundsätzlich möglich, es verbleiben jedoch zwischen den Tischen erhebliche Freiräume, die dafür sorgen, dass die Schüler letztlich einen verhältnismäßig hohen Abstand zueinander haben und nicht in einer kommunikationsfördernden Weise einander zugewandt sitzen. Im Stand der Technik wurden zwar bereits Tische vorgestellt, die ein unregelmäßiges Viereck als Tischplatte aufweisen, auch diese haben sich jedoch als nicht ideal herausgestellt, weil beispielsweise eine weitgehend lückenlose Zusammenstellung als 6er-Tischgruppe nicht möglich ist. Grundsätzlich sind natürlich auch große Tische bekannt, an denen 4, 6, 12 oder auch mehr Personen Platz nehmen können, diese sind jedoch insofern nachteilig, als sie weit weniger Flexibilität erlauben und durch eine starre Größenfestlegung ausschließlich auf die Gruppenarbeit ausgerichtet sind, d. h. für den herkömmlichen Frontalunterricht sind solche Tische ungeeignet. Im Gegensatz dazu sind Einzel- oder Zweiertische in klassischer Rechteckform vornehmlich auf den herkömmlichen Frontalunterricht ausgerichtet. Ähnliche Problematiken wie im Schulbereich stellen sich auch an anderer Stelle, beispielsweise in Räumen, in denen Kurse für Erwachsene abgehalten werden, Konferenzräumen etc.

Aus der NL 1 027 312 C1 ist ein fünfeckiger Tisch bekannt, der eine Hauptseite aufweist, an die sich eine Person setzen kann, sowie zwei parallele und zwei schräge Seiten. Der Tisch erlaubt verschiedene Kombinationsmöglichkeiten.

Es stellt sich somit die Aufgabe, einen Tisch bzw. eine Tischplatte zur Verfügung zu stellen, die auf der einen Seite einzeln nutzbar sind, die jedoch eine möglichst große Flexibilität hinsichtlich des Zusammenstellens in Tischgruppierungen unterschiedlicher Zahl ermöglicht, ohne dabei unnötig Raum zu verschenken, um zu gewährleisten, dass die an einem Tisch befindlichen Personen keine zu großen Abstände zueinander haben.

Die Aufgabe wird erfindungsgemäß gelöst durch eine Tischplatte, welche in der Draufsicht betrachtet ein Vieleck mit mindestens vier Ecken und mindestens vier Tischkanten ist, wobei
- das Vieleck ein Fünfeck ist,
- das Vieleck einen 150°-Winkel aufweist,
- zwei Geraden, die entlang zweier Tischkanten verlaufen, zueinander einen Winkel von 30° bilden,
- zwei Geraden, die entlang zweier Tischkanten verlaufen, zueinander einen Winkel von 60° bilden und
- zwei Tischkanten zueinander einen Winkel von 90° bilden.

Daneben betrifft die Erfindung auch einen Tisch mit einer erfindungsgemäßen Tischplatte.

Die Erfindung beruht darauf, dass das Vorsehen der genannten Winkel eine besonders hohe Flexibilität beim Zusammenstellen der mit der erfindungsgemäßen Tischplatte versehenen Tische erlaubt. Beispielsweise kann an eine der Tischkanten, für die eine entlang der Tischkante verlaufende Gerade mit einer weiteren Gerade einen 30°-Winkel ausbildet, ein zweiter gleichartiger Tisch angestellt werden, und zwar mit der Tischkante, die der weiteren den 30°-Winkel ausbildenden Tischkante entspricht. Im Ergebnis bedeutet dies, dass der zweite Tisch gegenüber dem ersten Tisch um 30° gedreht ist. Dies kann für den dritten, vierten etc. Tisch wiederholt werden, sodass jeder Tisch um 30° gegenüber dem vorhergehenden Tisch gedreht ist. Da 12 x 30° = 360° ist, ergibt sich somit ein lückenloser Kreis von 12 Tischen, wobei an einer außen liegenden Tischseite typischerweise jeweils eine Person sitzen kann.

Stellt man an eine Tischkante, für die eine entlang der Tischkante verlaufende Gerade mit einer weiteren Gerade einen 60°-Winkel ausbildet, einen zweiten gleichartigen Tisch, und zwar mit der Tischkante, die der weiteren den 60°-Winkel ausbildenden Tischkante entspricht, ergibt sich insgesamt eine Drehung des zweiten Tisches gegenüber dem ersten Tisch um 60°. Dies setzt sich fort im Verhältnis des dritten zum zweiten, des vierten zum dritten Tisch usw.. Stellt man 6 Tische in dieser Weise zusammen, so ergibt sich wiederum ein vollständiger Kreis von 6 x 60° = 360°, d. h. 6 Tische lassen sich ohne nennenswerte Lücken zwischen den aneinander gestellten Tischkanten zu einem Kreis zusammenstellen. Eine solche Konstellation ist beispielsweise bei aus dem Stand der Technik bekannten unregelmäßigen Vierecktischen nicht möglich.

Daneben sind selbstverständlich auch weitere Tischkonstellationen möglich. Beispielsweise können 4 gleichartige Tische so aneinandergestellt werden, dass die erste einen 90°-Winkel ausbildende Tischkante des ersten Tisches an die zweite einen 90°-Winkel ausbildende Tischkante des zweiten Tisches stößt. Somit ergibt sich eine Drehung des zweiten gegenüber dem ersten Tisch um 90°. Stellt man insgesamt vier gleichartige Tische in dieser Weise zusammen, erhält man einen Kreis von vier Tischen. Möglich sind auch 2er- oder 3er-Gruppierungen. Ebenso ist es möglich, zwölf Tische in einem Oval aufzustellen oder einzelne Tische in der Mitte eines Tischkreises vorzusehen. Stellt man zwei, aus jeweils drei gleichartigen Tischen bestehende Viertelsegmente des 12er-Tischkreises wie oben beschrieben einander gegenüber und ergänzt die Anordnung um zwei weitere gleichartige Einzeltische, erhält man eine ovale Tischgruppe mit insgesamt acht Tischen.

Soweit erfindungsgemäß definiert wird, dass zwei Geraden, die entlang zweier Tischkanten verlaufen, zueinander einen bestimmten Winkel bilden, kann dies bedeuten, dass die Tischkanten selbst zueinander diesen Winkel haben, wenn die jeweiligen Tischkanten aneinanderstoßen. Ebenso gut ist es aber auch möglich, dass die jeweiligen Tischkanten nicht direkt aneinanderstoßen, sondern nur ihre gedachten Verlängerungen, mit anderen Worten Geraden, die entlang dieser Tischkanten verlaufen und diese virtuell verlängern. In diesem Fall liegt zwischen den jeweiligen Tischkanten zumeist noch eine weitere Tischkante; mit anderen Worten ist die einen 30°- oder 60°-Winkel ausbildende Spitze der Tischplatte entlang der weiteren Tischkante abgeschnitten. Denkbar ist auch, dass zwischen den jeweiligen Tischkanten mehr als eine weitere Tischkante liegt.

Die Tischkanten, entlang derer die Geraden verlaufen, die zueinander einen 30°-Winkel bilden, können als Tischkante 1 und Tischkante 2 bezeichnet werden. Hierbei handelt es sich typischerweise um die längsten Tischkanten, an denen die Personen zumeist dann sitzen, wenn der Tisch in Alleinstellung benutzt wird. Zwischen diesen beiden Tischkanten verläuft die Tischkante 4, d. h. die Tischkante, die durch gedankliches Abschneiden der 30°-Spitze gebildet wird.

Die Tischkanten, entlang derer die Geraden verlaufen, die zueinander einen 60°-Winkel bilden, können als Tischkante 2 und Tischkante 3 bezeichnet werden. Mit anderen Worten ist die Tischkante 2 als eine der typischerweise langen Tischkanten mit einer der den 30°-Winkel ausbildenden Tischkanten identisch. Zwischen den Tischkanten 2 und 3 liegt die zumeist recht kurze Tischkante 5, d. h. die Tischkante, die durch gedankliches Abschneiden der 60°-Spitze gebildet wird.

Entsprechend bilden bei dem Fünfeck die Tischkanten 1 und 3 den 90°-Winkel aus.

Insgesamt bedeutet dies, dass für die Ausbildung eines 12er-Tischkreises die Tischkante 2 des ersten Tisches an die Tischkante 1 des zweiten Tisches gestellt wird usw.. Die außen um den Tischkreis positionierten Personen sitzen somit an den Tischkanten 3.

Im Falle eines 6er-Tischkreises wird die Tischkante 3 des ersten Tisches an die Tischkante 2 des zweiten Tisches gestellt usw.. Die außen um den Tischkreis positionierten Personen sitzen somit an den Tischkanten 1.

Im Falle eines 4er-Tischkreises wird die Tischkante 1 des ersten Tisches an die Tischkante 3 des zweiten Tisches gestellt usw.. Die außen um den Tischkreis positionierten Personen sitzen somit an den Tischkanten 2.

In den typischen Konstellationen werden somit von den Tischkanten 1, 2 und 3 jeweils zwei Tischkanten aneinandergestellt, während die verbleibende Tischkante die Tischkante ist, an der eine Person sitzen kann. Dies trägt auch der Tatsache Rechnung, dass in der Regel die Tischkanten 1, 2 und 3 die längsten Tischkanten sind, während es sich bei den Tischkanten 4 und 5 zumeist um kürzere Abschnitte handelt.

Das Fünfeck weist einen 150°-Winkel auf. Hierbei handelt es sich in der Regel um den Winkel zwischen den oben genannten Tischkanten 2 und 5. Des Weiteren kann das Vieleck einen zweiten 90°-Winkel aufweisen, wobei es sich in der Regel um den Winkel zwischen den Tischkanten 3 und 5 handelt. Die einen 150°-Winkel ausbildende Ecke und die den zweiten 90°-Winkel ausbildende Ecke können zueinander benachbart sein. Schließlich können die beiden den ersten und den zweiten 90°-Winkel ausbildenden Ecken zueinander benachbart sein. Bei einem in dieser Weise aufgebauten Fünfeck ergeben sich die die Erfindung ausmachenden Winkel von 30° bzw. 60° in der Verlängerung der entsprechenden Tischkanten quasi automatisch. Des Weiteren wird auf diese Weise sichergestellt, dass sich beispielsweise bei Zusammenstellung zu einer 12er-Gruppierung an der Außenseite des Tischkreises jeweils gerade Seiten bilden, an denen eine Person mit Blick in Richtung des Zentrums des Tischkreises sitzen kann.

Die Ecken des Vielecks müssen nicht als spitze Ecken ausgeführt, sondern können abgerundet sein. Dies ist insofern sogar bevorzugt, als eine gewisse Abrundung die Gefahr von Verletzungen verringert, was insbesondere im Schulbereich von Bedeutung ist. Unter dem jeweiligen Winkel an einer abgerundeten Ecke wird entsprechend der Winkel zwischen den Linien verstanden, die die Verlängerungen der in der Ecke aneinanderstoßenden Tischkanten darstellen. Das Ausmaß der Abrundung der Tischkante kann nach Bedarf gewählt werden. Vorteilhaft sind für die abgerundeten Ecken beispielsweise Radien zwischen 20 und 120 mm.

Als Tischbreite wird die längst mögliche Breite des Tisches bzw. der Tischplatte verstanden. Bei der oben beschriebenen bevorzugten Ausführungsform entspricht dies der Tischkante 1, an die in der Regel angestuhlt wird, wenn der Tisch in Einzelstellung verwendet wird. Die Tischbreite liegt bevorzugt in einer Größenordnung von 65 - 100 cm, bevorzugt 80 - 90 cm.

Soweit im Rahmen dieser Anmeldung von Winkeln die Rede ist, sei klargestellt, dass diese eine gewisse Toleranz aufweisen dürfen, ohne vom Schutzumfang des Patents abzuweichen. Eine Winkelangabe im Bereich von ± 5° wird als von der Winkelangabe weiterhin erfasst angesehen, d. h. auch ein Winkel von 25° bis 35° wird erfindungsgemäß als 30°-Winkel, ein Winkel von 55° bis 65° als 60°-Winkel und ein Winkel von 85° bis 95° als 90°-Winkel angesehen.

Es ist auch möglich eine oder mehrere Tischkanten der Tischplatte nicht gerade, sondern gebogen, gewölbt oder anderweitig in besonderer Weise auszugestalten.

Neben der Tischplatte betrifft die Erfindung auch einen Tisch mit einer Tischplatte wie zuvor beschrieben sowie einer Tischunterkonstruktion. Die Tischunterkonstruktion des Tisches kann grundsätzlich in beliebiger Weise ausgestaltet sein, beispielsweise mit einzelnen Tischbeinen, einem einzelnen mittig angebrachten Tischbein mit breiter Aufstandsfläche o. ä.

Die Erfindung sowie das technische Umfeld werden nachfolgend anhand der Figuren beispielhaft näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
- Fig. 1,2,3: die schematische Darstellung einer erfindungsgemäßen Tischplatte in der Draufsicht;
- Fig. 4: die schematische Darstellung einer 12er-Kombination des erfindungsgemäßen Tisches in der Draufsicht;
- Fig. 5: die schematische Darstellung einer 6er-Kombination des erfindungsgemäßen Tisches in der Draufsicht;
- Fig. 6: die schematische Darstellung einer 4er-Kombination des erfindungsgemäßen Tisches in der Draufsicht;

- Fig. 7: die schematische Darstellung einer 8er-Kombination des erfindungsgemäßen Tisches in der Draufsicht und
- Fig. 8a,b: die schematische Darstellung von zwei Varianten einer erfindungsgemäßen Tischplatte in der Draufsicht.

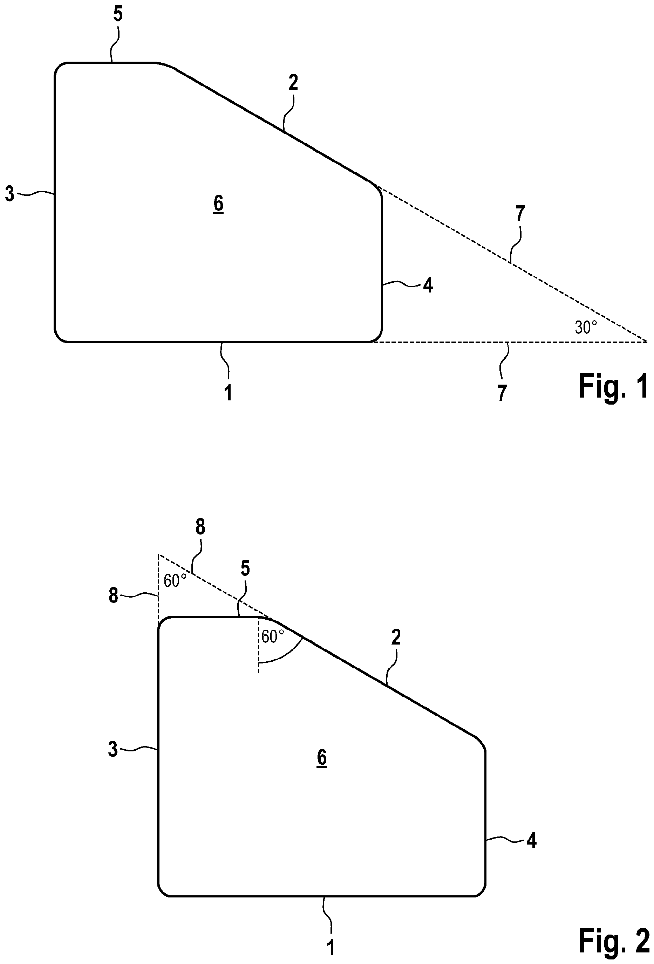

In Fig. 1 ist die erfindungsgemäße Tischplatte 6 in der Draufsicht dargestellt. Die Tischplatte weist fünf abgerundete Ecken und fünf Tischkanten 1, 2, 3, 4 und 5 auf. Die Geraden 7, die eine Verlängerung der Tischkanten 1 und 2 darstellen, bilden zueinander einen Winkel von 30°. In der linken unteren Ecke stoßen die Tischkanten 1 und 3 in einem 90°-Winkel aufeinander. Im vorliegenden Beispiel weist die Tischplatte noch zwei weitere 90°-Winkel auf, diese sind jedoch nicht obligatorisch. Die drei 90°-Winkel sind zueinander benachbart. Die Tischkante 1 ist die Tischkante, an der eine Person bei Einzelnutzung in der Regel sitzt. Insgesamt sind die Tischkanten 1, 2 und 3 länger als die Tischkanten 4 und 5 und dienen daher bevorzugt als Sitzplatz und dem Anstellen eines Stuhles. Die Tischkante 4 ist die Tischkante, die sich beim gedanklichen Abschneiden der rechts gestrichelt dargestellten, einen 30°-Winkel aufweisenden Spitze ergibt. Die Breite der einzelnen Tischkanten ist variabel.

Die Fig. 2 entspricht der Darstellung aus Fig. 1, allerdings ist hier der Schwerpunkt auf die Darstellung des 60°-Winkels gelegt, der von den beiden Geraden 8 ausgebildet wird, welche eine Verlängerung der Tischkanten 2 und 3 darstellen. Die Tischkante 5 ist die Tischkante, die sich beim gedanklichen Abschneiden der links oben gestrichelt dargestellten, einen 60°-Winkel aufweisenden Spitze ergibt. Zwischen den Tischkanten 2 und 5 ergibt sich im vorliegenden Fall ein 150°-Winkel.

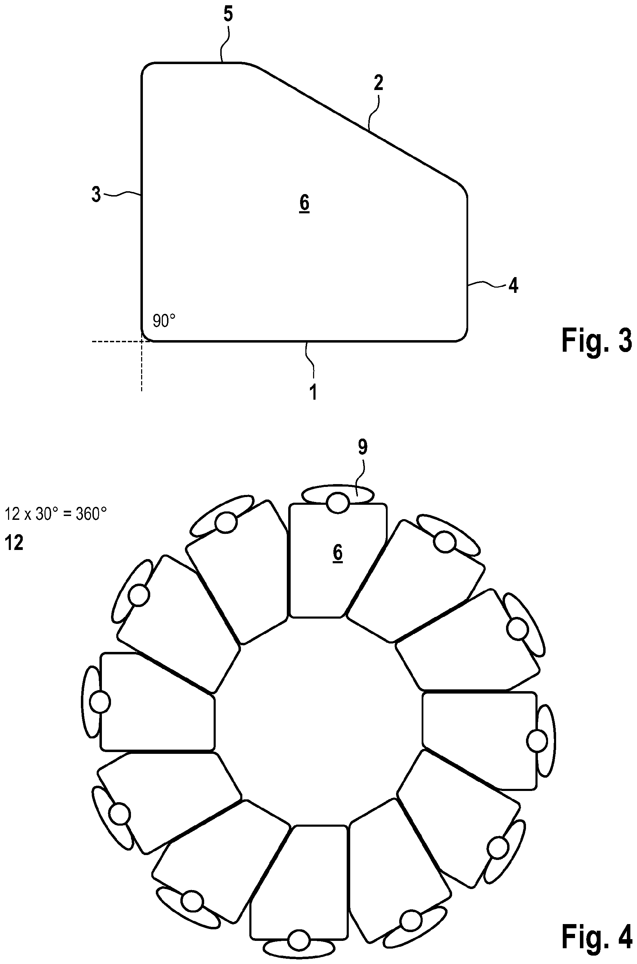

Die Fig. 3 entspricht der Darstellung aus Fig. 1, allerdings ist hier der Schwerpunkt auf die Darstellung des 90°-Winkels gelegt, der von den beiden Tischkanten 1 und 3 ausgebildet wird.

In Fig. 4 ist eine 12er-Kombination dargestellt. Bei dieser grenzt jeweils die Tischkante 2 an die Tischkante 1 des nächsten Tisches an. Wie in Fig. 1 dargestellt, bilden die Verlängerungen dieser beiden Tischkanten 1, 2 einen 30°-Winkel aus, es ergibt sich somit ein Versatz der einzelnen nebeneinander stehenden Tische zueinander um jeweils 30°. Bei Zusammenstellung von 12 Tischen ergibt sich somit wiederum ein vollständiger Kreis von 12 x 30° = 360°. Darüber hinaus weist die 12er-Kombination den zusätzlichen Vorteil auf, dass die Personen 9 jeweils an der Tischkante 3 mit Blick zur Mitte sitzen können. Selbstverständlich können die Tischplatten 6 ebenso gut jeweils in gespiegelter Form verwendet werden, in diesem Fall würde sich lediglich die "Drehrichtung" des Tischkreises ändern.

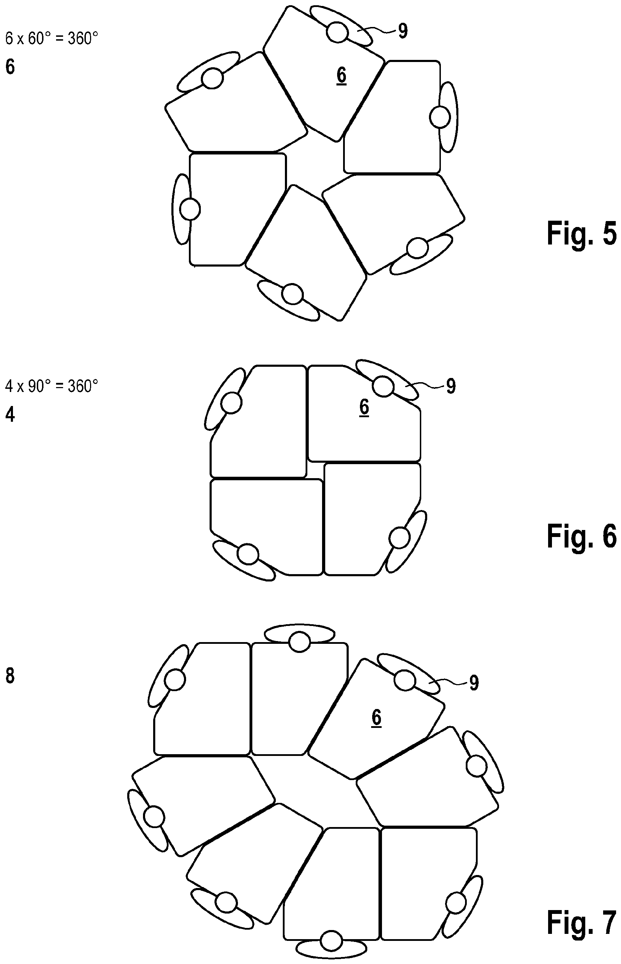

In der Fig. 5 ist eine Zusammenstellung von 6 erfindungsgemäßen Tischen in der Draufsicht dargestellt. Die Tischplatten 6 sind so aneinander gestellt, dass jeweils eine Tischkante 3 an die Tischkante 2 des nächsten Tisches grenzt. Wie in Fig. 2 dargestellt, bilden die Verlängerungen dieser beiden Tischkanten 2, 3 einen 60°-Winkel aus, es ergibt sich somit ein Versatz der einzelnen nebeneinander stehenden Tische zueinander um jeweils 60°. Auf diese Weise ist jeder Tisch um genau 60° gegenüber dem vorhergehenden Tisch gedreht. Durch Zusammenstellung von 6 Tischen ergibt sich somit ein vollständiger Kreis von 6 x 60° = 360°. Die Personen 9 sitzen an der Tischkante 1 mit Blick zur Mitte des Tischkreises.

In der Fig. 6 ist eine Zusammenstellung von 4 erfindungsgemäßen Tischen in der Draufsicht dargestellt. Die Tischplatten 6 sind so aneinander gestellt, dass jeweils eine Tischkante 1 an die Tischkante 3 des nächsten Tisches grenzt. Wie in Fig. 3 dargestellt, bilden diese beiden Tischkanten 1, 3 einen 90°-Winkel aus, es ergibt sich somit ein Versatz der einzelnen nebeneinander stehenden Tische zueinander um jeweils 90°. Auf diese Weise ist jeder Tisch um genau 90° gegenüber dem vorhergehenden Tisch gedreht. Durch Zusammenstellung von vier Tischen ergibt sich somit ein vollständiger Kreis von 4 x 90° = 360°. Die Personen 9 sitzen an der Tischkante 2 mit Blick zur Mitte des Tischkreises.

In Fig. 7 ist eine 8er-Kombination dargestellt, bei der zwei Viertelsegmente einer 12er-Kombination wie oben beschrieben, bestehend aus jeweils drei Tischen, zum Einsatz kommen, wobei zusätzlich zwei Einzeltische rechtwinklig angruppiert werden. Es ergibt sich ein Oval für 8 Personen.

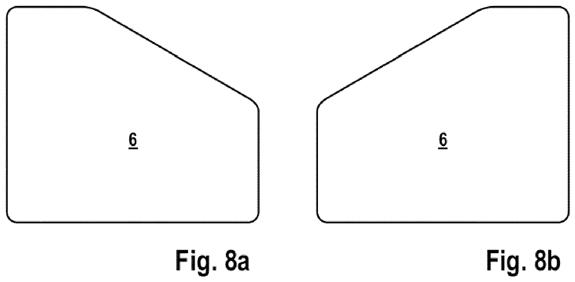

In den Figuren 8a und 8b sind die erfindungsgemäßen Tischplatten 6 schematisch in der Draufsicht dargestellt. Es versteht sich von selbst, dass das der Erfindung zugrundeliegende Prinzip auch für das entsprechende Spiegelbild einer Tischplatte in gleicher Weise anwendbar ist; je nach Tischkreis verändert sich lediglich die "Drehrichtung" für die nebeneinander gestellten Tische. Für die Mehrheit der Rechtshänder ist allerdings die Variante gemäß Fig. 8a bevorzugt; Tischplatten gemäß Fig. 8b eignen sich eher für Linkshänder.

## Patentansprüche

1. Tischplatte, welche in der Draufsicht betrachtet ein Vieleck mit mindestens vier Ecken und mindestens vier Tischkanten ist, wobei
- das Vieleck einen 150°-Winkel aufweist,
- zwei Geraden (7), die entlang zweier Tischkanten (1, 2) verlaufen, zueinander einen Winkel von 30° bilden,
- zwei Geraden (8), die entlang zweier Tischkanten (2, 3) verlaufen, zueinander einen Winkel von 60° bilden und
- zwei Tischkanten (1, 3) zueinander einen Winkel von 90° bilden, und **dadurch gekennzeichnet, dass** das Vieleck ein Fünfeck ist.

2. Tischplatte nach Anspruch 1, **dadurch gekennzeichnet, dass** zwischen den Tischkanten (1, 2), entlang derer die einen 30°-Winkel bildenden Geraden (7) verlaufen, mindestens eine weitere Tischkante (4) liegt.

3. Tischplatte nach Anspruch 1 oder 2, **dadurch gekennzeichnet, dass** zwischen den Tischkanten (2, 3), entlang derer die einen 60°-Winkel bildenden Geraden (8) verlaufen, mindestens eine weitere Tischkante (5) liegt.

4. Tischplatte nach einem der Ansprüche 1 bis 3, **dadurch gekennzeichnet, dass** das Vieleck einen zweiten 90°-Winkel aufweist.

5. Tischplatte nach Anspruch 4, **dadurch gekennzeichnet, dass** die einen 150°-Winkel ausbildende Ecke und die den zweiten 90°-Winkel ausbildende Ecke zueinander benachbart sind.

6. Tischplatte nach Anspruch 4 oder 5, **dadurch gekennzeichnet, dass** die den ersten und den zweiten 90°-Winkel ausbildenden Ecken zueinander benachbart sind.

7. Tischplatte nach einem der Ansprüche 1 bis 6, **dadurch gekennzeichnet, dass** ein oder mehrere Ecken des Vielecks abgerundet sind.

8. Tisch, umfassend eine Tischplatte (6) nach einem der Ansprüche 1 bis 7 und eine Tischunterkonstruktion.

## Claims

1. Table top, which when viewed in plan view is a polygon with at least four corners and at least four table edges, wherein
- the polygon has a 150° angle,
- two straight lines (7) running along two table edges (1, 2) form an angle of 30° to one another,
- two straight lines (8) running along two table edges (2, 3) form an angle of 60° to one another and
- two table edges (1, 3) form an angle of 90° to one another, and **characterised in that** the polygon is a pentagon.

2. Table top according to claim 1, **characterised in that** at least one other table edge (4) lies between the table edges (1, 2) along which the straight lines (7) forming a 30° angle run.

3. Table top according to claim 1 or 2, **characterised in that** at least one other table edge (5) lies between the table edges (2, 3) along which the straight lines (8) forming a 60° angle run.

4. Table top according to one of claims 1 to 3, **characterised in that** the polygon has a second 90° angle.

5. Table top according to claim 4, **characterised in that** the corner forming a 150° angle and the corner forming the second 90° angle are adjacent to one another.

6. Table top according to claim 4 or 5, **characterised in that** the corners forming the first and the second 90° angle are adjacent to one another.

7. Table top according to any one of claims 1 to 6, **characterised in that** one or more corners of the polygon are rounded.

8. Table comprising a table top (6) according to any one of claims 1 to 7 and a table substructure.

## Revendications

1. Plateau de table, lequel est, vu sur la vue d'en haut, un polygone avec au moins quatre coins et au moins quatre bords de table, dans lequel
- le polygone présente un angle de 150°,
- deux droites (7), qui s'étendent le long de deux bords de table (1, 2), forment l'une par rapport à l'autre un angle de 30°,
- deux droites (8), qui s'étendent le long de deux bords de table (2, 3), forment l'une par rapport à l'autre un angle de 60°, et
- deux bords de table (1, 3) forment l'un par rapport à l'autre un angle de 90°, et
**caractérisé en ce que** le polygone est un pentagone.

2. Plateau de table selon la revendication 1, **caractérisé en ce qu'**au moins un autre bord de table (4) se situe entre les bords de table (1, 2), le long desquels s'étendent les droites (7) formant un angle de 30°.

3. Plateau de table selon la revendication 1 ou 2, **caractérisé en ce qu'**au moins un autre bord de table (5) se situe entre les bords de table (2, 3), le long desquels s'étendent les droites (8) formant un angle de 60°.

4. Plateau de table selon l'une quelconque des revendications 1 à 3, **caractérisé en ce que** le polygone présente un deuxième angle de 90°.

5. Plateau de table selon la revendication 4, **caractérisé en ce que** le coin formant un angle de 150° et le coin formant le deuxième angle de 90° sont adjacents l'un par rapport à l'autre.

6. Plateau de table selon la revendication 4 ou 5, **caractérisé en ce que** les coins réalisant le premier et le deuxième angle de 90° sont adjacents l'un par rapport à l'autre.

7. Plateau de table selon l'une quelconque des revendications 1 à 6, **caractérisé en ce qu'**un ou plusieurs coins du polygone sont arrondis.

8. Table comprenant un plateau de table (6) selon l'une quelconque des revendications 1 à 7 et une sous-structure de table.
